# EUROPEAN PATENT APPLICATION

(11) **EP 4 663 577 A1**
(43) Date of publication of application: **17.12.2025**
(21) Application number: 23923820.7
(22) Date of filing: 04.12.2023
(51) Int. Cl.: B65F 1/14, B65F 1/16, B65F 1/00, B65F 7/00

(54) **DETACHABLE SMART TRASH CAN**

(30) Priority: 21.02.2023 CN 202320266771 U
(71) Applicant: Fuzhou Zhijing International Trade Co., Ltd, Fuzhou Fujian 350000 (CN)
(72) Inventor: LIN, Zengdong, Fuzhou, Fujian 350000 (CN)
(74) Representative: Plavsa, Olga
(86) International application number: PCT/CN2023/136041
(87) International publication number: WO 2024/174657

(57) **Abstract**

A detachable smart trash can comprises a can body and a can lid. The can lid is arranged at an upper end of the can body. A can head is further detachably arranged on the inner side of the can body and comprises a closing component, a power component, and a can head body. An opening is arranged at the upper end of the can head body. The power component is installed on the inner side of the can head body and drives the closing component to open and close the opening of the can head body. In addition, a water tray is arranged at the bottom of the can body. Unlike the traditional double-curtain opening mode, the invention adopts a single-curtain opening and closing mode, with a curtain concealing groove added to one side.

## Description

### Technical Field

The invention relates to the technical field of smart trash cans, in particular to a detachable smart trash can.

### Background Art

Existing trash cans have several design shortcomings in intelligence, deodorization, and structure. In terms of intelligent opening, most of the existing trash cans adopt the dual-curtain opening mode. This mode requires the power mechanisms to simultaneously open and close the curtains on both sides. This results in a complex structure and inevitable synchronization errors caused by transmission system or motor issues that cannot be resolved through mechanical structure design. As for deodorization, the lack of rational deodorizing box design remains a challenge. Gaps between curtain blades inevitably allow odors to escape. Conventional spray-based deodorizing methods tend to increase humidity inside the trash can, exacerbating bacterial growth and worsening odor problems. When it comes to the structure of the can body, the traditional monolithic can body has major drawbacks for flat packaging. Its large volume significantly increases production, packaging, and logistics costs for enterprises. Moreover, moving such oversized trash cans is inconvenient for consumers, as they are difficult to pack and transport. Disposing of them instead would be wasteful, creating further inconvenience.

### Summary of the Invention

To address the shortcomings of the prior art, the invention aims to provide a detachable smart trash can designed to overcome the technical problems mentioned in the background art.

To solve the technical problems, the invention adopts the following technical proposal:
A detachable smart trashcan consists of a can body and a lid. The can lid is arranged at the upper end of the can body. A can head is detachably mounted on the inner side of the can body and includes a closing component, a power component, and a head body. An opening is arranged at the upper end of the can head body. The power component is installed on the inner side of the can head body and drives the closing component to open and close the opening of the can head body. In addition, a water tray is arranged at the bottom of the can body.

The closing component consists of a curtain. The can head body is equipped with a curtain-concealing groove, in which part of the curtain is concealed during opening. Curtain sliding rails are arranged on both sides of the can head body. Roller shafts for sliding on the curtain sliding rails are also arranged on both sides of the curtain. The power component comprises motors, power gears, and driven gears. The motor is installed on the inner side of the can head body, with its output ends connected to the power gears. The power gears are connected to the driven gears, which are coaxially connected to a driving wheel. A roller shaft groove capable of driving the roller shafts to slide is arranged on the driving wheel.

The curtain comprises blades and roller shafts. A first claw is arranged on one side of the blade, while a second claw is arranged on the opposite side. The two claws are oriented in opposite directions: the first claw clamps one roller shaft together with the second claw of the previous blade, while the second claw clamps another roller shaft together with the first claw of the next blade. The roller shaft is wider than the blade, and multiple blades and roller shafts are mutually clamped to form the curtain. A side clamping groove is arranged on the inner side of the can body. One end of a side clamping piece is clamped inside the side clamping groove, while the other end extends into the curtain concealing groove. The curtain sliding rail is arranged on the inner side of the side clamping piece. In addition, a wheel groove for nesting the driven gears and the driving wheel is arranged on the outer side of the side clamping piece.

The power component also comprises a synchronous shaft. Driven gears are distributed on both sides of the synchronous shaft. They are synchronously driven by connecting the motor on one side to the power gears. The synchronous shaft simultaneously passes through the wheel grooves on the side clamping pieces.

The can body further comprises two front clamping plates at the front and rear of the can head and two side clamping plates on both sides of the can head. These plates are mutually clamped in pairs. An outer limit clamping groove is arranged on the side of the front clamping plate, while an inner limit clamping piece is arranged on the side clamping plate opposite to the outer limit clamping groove. A clamping top block is arranged on the inner side of the outer limit clamping groove, while a corresponding clamping top groove is arranged on the inner side of the inner limit clamping piece. When the front and side clamping plates are clamped together, the inner limit clamping piece and the outer limit clamping groove are connected for positioning and limiting. Once they are clamped to a certain depth, the clamping top block is precisely clamped with the clamping top groove.

A front clamping piece is arranged on one side of the can head body, with a control board installed on it. An indicator light is arranged on one side of the control board, and a control button is connected to it. A deodorizing box is installed on the inner side of the front clamping piece, featuring a deodorizing hole slot on the side facing the can head. A ring-shaped bump is arranged at the upper end of the can lid, onto which a decorative frame is fitted. A control panel is arranged on one side of the decorative frame corresponding to the control board, wherein control buttons pass upward through the can lid to press against the control panel. An indicator light hole is also arranged on the outer side of the can lid. In addition, an infrared sensor is integrated on the control board.

The decorative frame and the ring-shaped bump are magnetically connected.

A box clamping groove is arranged on the inner side of the front clamping piece, with a stop column inside the groove. A clamping block is arranged at the lower end of the stop column. A stop edge is arranged on the side of the deodorizing box corresponding to the position of the stop column. A clamping switch is arranged on the inner side of the stop edge, onto which a switch bump capable of clamping with the clamping block is arranged. A handgrip groove is arranged on one side of the deodorizing box. The deodorizing box is clamped into the box clamping groove by the fit between the clamping switch and the clamping block as well as the fit between the stop column and the stop edge. A diminishing guide edge is arranged on the side of the deodorizing box. Its thickness gradually decreases from the inner side to the outer side of the deodorizing box, allowing the deodorizing box to be quickly inserted and gradually pressed when clamped with the box clamping groove.

A universal wheel is arranged below the water tray for omnidirectional movement. A bagging ring is also arranged below the opening of the can head body for fitting garbage bags.

Compared to prior art, the invention offers the following advantages:
(1) Unlike the traditional double-curtain opening mode, the invention adopts a single-curtain opening and closing mode. This results in a simpler structure, requiring only one curtain-concealing groove on one side. Moreover, the blade component of the invention is more rational and stable, and the connection between the roller shafts and the driving wheel is more stable. Multiple power units between the power components are unnecessary, ensuring synchronous motion without synchronization errors. In addition, unilateral curtain operation reduces motor load, enabling faster opening and closing speeds compared to dual-curtain configurations.
(2) For deodorization, the invention incorporates a deodorizing box at the front clamping piece. The deodorizing box opens and closes inwardly for convenient deodorant replacement. Its deodorizing hole slot is oriented toward the interior of the can head body, emitting odor toward the garbage. The water tray is arranged at the lower end of the can body to collect any excess water.
(3) Regarding structural design, the can body of the invention uses mortise-and-tenon joints to connect the front and side clamping plates. These plates are clamped together in pairs and can be directly disassembled, making assembly and disassembly simple. This design directly reduces packaging volume and transportation costs while also allowing consumers to disassemble the trash can for easier handling during use.
(4) With the installation of an infrared sensor, the curtain can be opened and closed directly through gesture control, which is very intelligent.

### Brief Description of the Drawings

FIG. 1 is an exploded view 1 of the overall structure of the trash can of the invention.
FIG. 2 is an exploded view 2 of the overall structure of the trash can of the invention.
FIG. 3 is a radial section view 1 of the overall structure of the trash can of the invention.
FIG. 4 is a radial section view 2 of the overall structure of the trash can of the invention.
FIG. 5 is a structure diagram of the can head body of the invention.
FIG. 6 is a structure diagram of the side clamping piece of the trash can of the invention.
FIG. 7 is a structure diagram of the curtain of the trash can of the invention.
FIG. 8 is a structure diagram of the blade and roller shaft of the trash can of the invention.
FIG. 9 is a structure diagram of the front clamping plate and side clamping plate of the trash can of the invention.
FIG. 10 is a structure diagram of the cover plate and decorative frame of the trash can of the invention.
FIG. 11 is a structure diagram of the power component of the trash can of the invention.
FIG. 12 is a schematic diagram of the mounting structure of the trash can's deodorizing box of the invention.
FIG. 13 is a structure diagram of the control component of the trash can of the invention.
FIG. 14 is an assembly drawing of the overall structure of the trash can of the invention.

Reference signs: Can body 1, can lid 2, can head 3, can head body 31, opening 310, curtain concealing groove 311, curtain sliding rail 312, side clamping groove 313, side clamping piece 32, wheel groove 320, front clamping plate 11, side clamping plate 12, outer limit clamping groove 110, inner limit clamping piece 120, clamping top block 111, clamping top groove 121, front clamping piece 5, control board 51, indicator light 52, control button 510, deodorizing box 6, deodorizing hole slot 61, ring-shaped bump 21, decorative frame 22, control panel 220, indicator light hole 23, infrared sensor 511, box clamping groove 53, stop column 530, clamping block 531, stop edge 62, clamping switch 63, switch bump 630, handgrip groove 64, diminishing guide edge 65; curtain 4, blade 41, roller shaft 42, first jaw 411, second jaw 412; water tray 8, universal wheel 9, bagging ring 10, power component 7, motor 71, power gear 72, driven gear 73, driving wheel 74, roller shaft groove 740, synchronous shaft 75.

### Detailed Description of the Invention

Hereinafter, the invention will be further described with reference to the accompanying drawings and embodiments. It should be noted that the various embodiments described below, as well as their technical features, may be combined arbitrarily to form new embodiments, provided that no conflict arises.

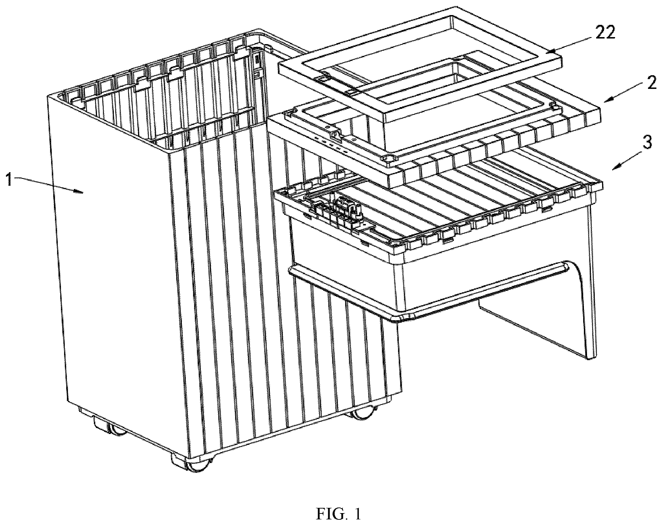

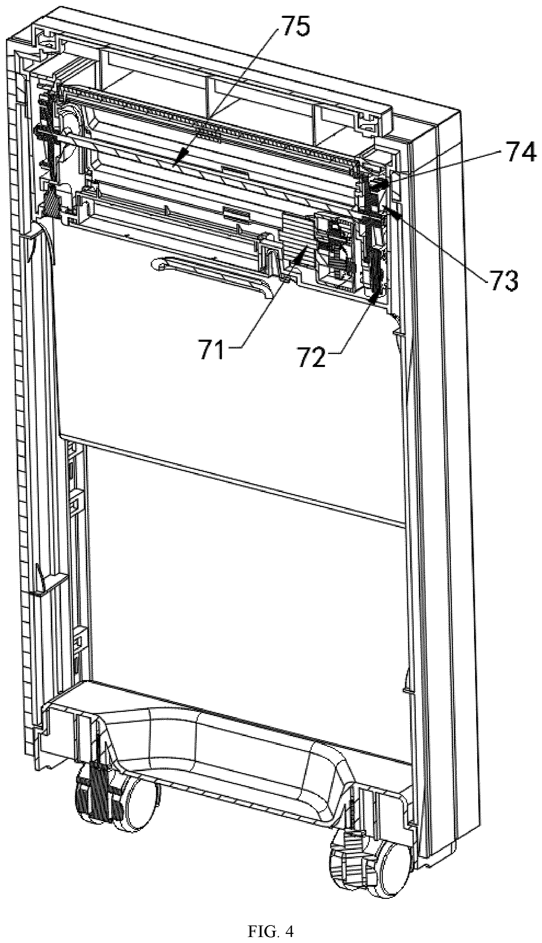

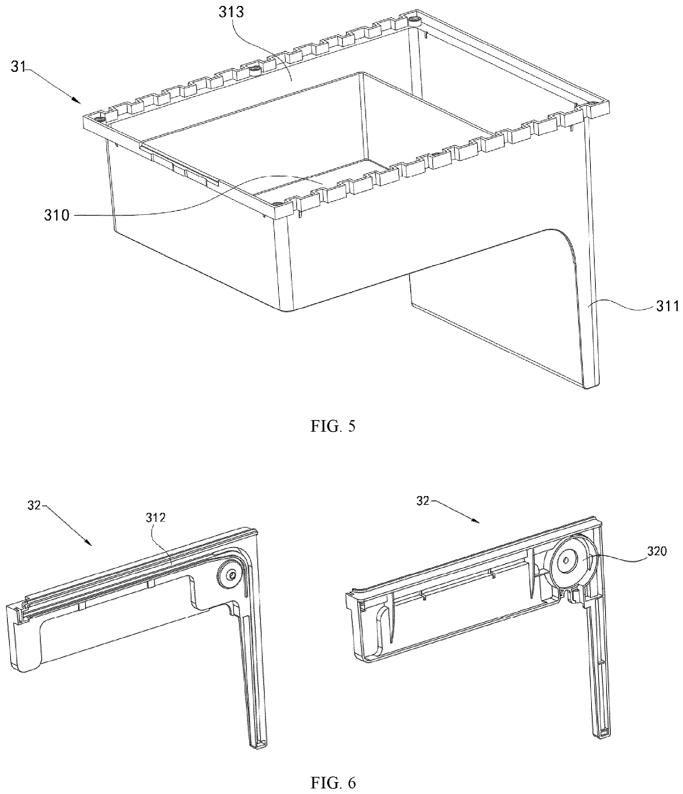

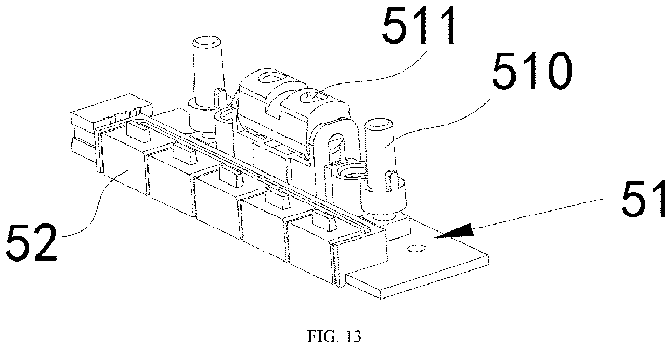

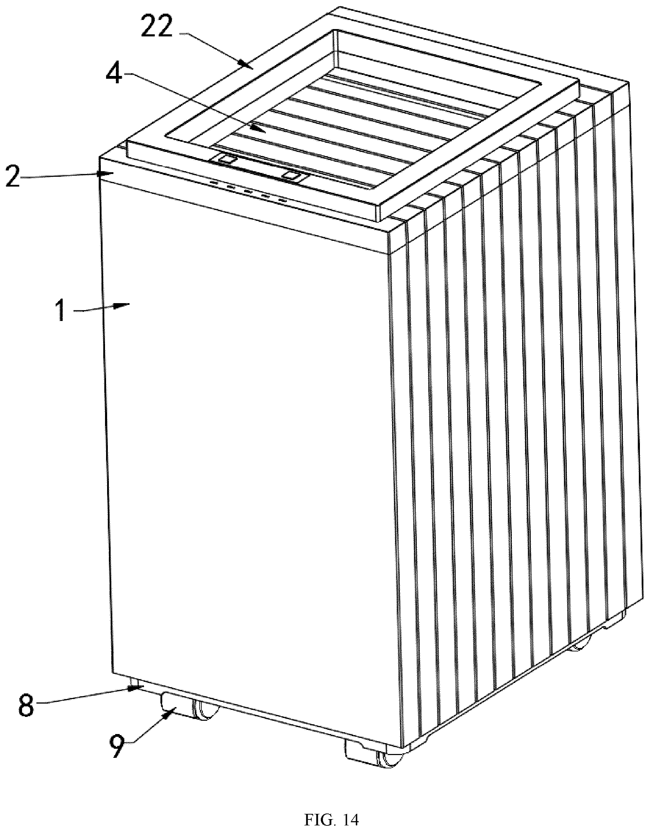

Embodiment 1: As shown in FIGS. 1-14, this embodiment discloses a detachable smart trash can, comprising a can body 1 and a can lid 2. The can lid 2 is arranged at the upper end of the can body 1. A can head 3 is arranged on the inner side of the can body 1. The can head 3 and the can body 1 are mutually sleeved or clamped and detachably installed. The can head 3 comprises a closing component, a power component 7, and a can head body 31. An opening 310 is arranged at the upper end of the can head body 31 to control the opening and closing of the curtain 4, allowing for the replacement of garbage bags and deodorants. The power component 7 is installed on the inner side of the can head body 31 and drives the closing component to open or close the opening 310 of the can head body 31. A water tray 8 is also arranged at the bottom of the can body 1 to collect ant water leaks from the garbage bag at the top, thereby preventing the ground from being contaminated.

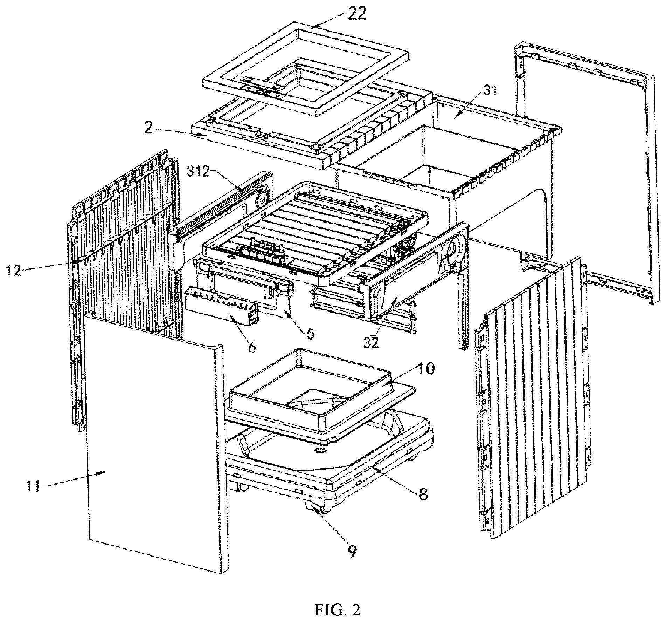

As shown in FIG. 2, the closing component comprises a curtain 4. A curtain concealing groove 311 is arranged on the inner side of the can head body 31, in which part of the curtain 4 is concealed during opening. Curtain sliding rails 312 are arranged on both sides of the can head body 31, while roller shafts 42 for sliding on the curtain sliding rails 312 are arranged on both sides of the curtain 4. The power component 7 comprises motors 71, power gears 72, and driven gears 73. The motors 71 are installed on the inner side of the can head body 31, with their output ends connected to the power gears 72. The power gears 72 are connected to the driven gears 73, which are coaxially connected to a driving wheel 74. A roller shaft groove 740 capable of driving the roller shafts 42 to slide is arranged on the driving wheel 74.

As shown in FIGS. 2-5 and FIG. 7, specifically, the curtain 4 herein is a single-sided curtain 4, while the roller shafts 42 are double-sided roller shafts 42. The roller shafts 42 on both sides are inserted into the curtain sliding rails 312 located on both sides. The number of roller shafts 42 should be such that the roller shafts 42 can support the weight of the curtain 4. Multiple roller shafts are distributed in an array across the curtain 4. When the curtain 4 is closed, one end of the curtain 4 abuts against the front end of the opening 310 of the can head body 31, while the other end (the lowest end) of the curtain 4 moves to the upper end of the curtain concealing groove 311. When the curtain 4 is opened, the other end of the curtain 4 moves downward into the curtain concealing groove 311 until the opening 310 of the can head body 31 is fully opened. At this point, the topmost part of the curtain 4 is arranged at the upper end of the curtain concealing groove 311. Compared with the structure of a traditional double-sided curtain 4, the structure of a single-sided curtain 4 does not require multiple sets of drive structures. This simple structure prevents synchronization issues. A single motor 71 drives a single curtain 4, resulting in higher opening and closing speeds.

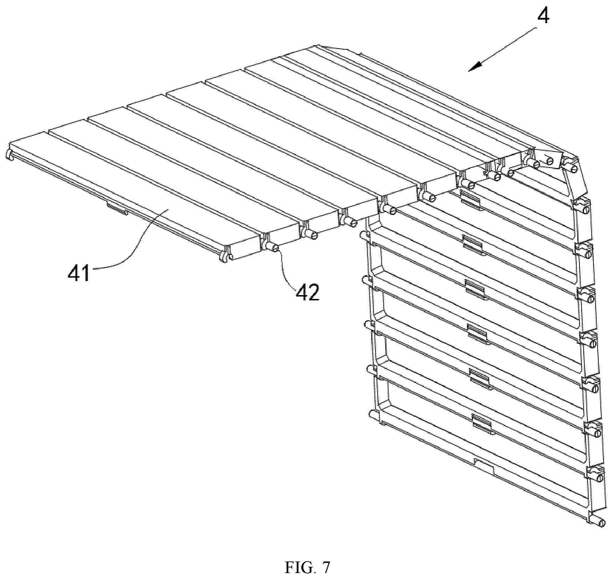

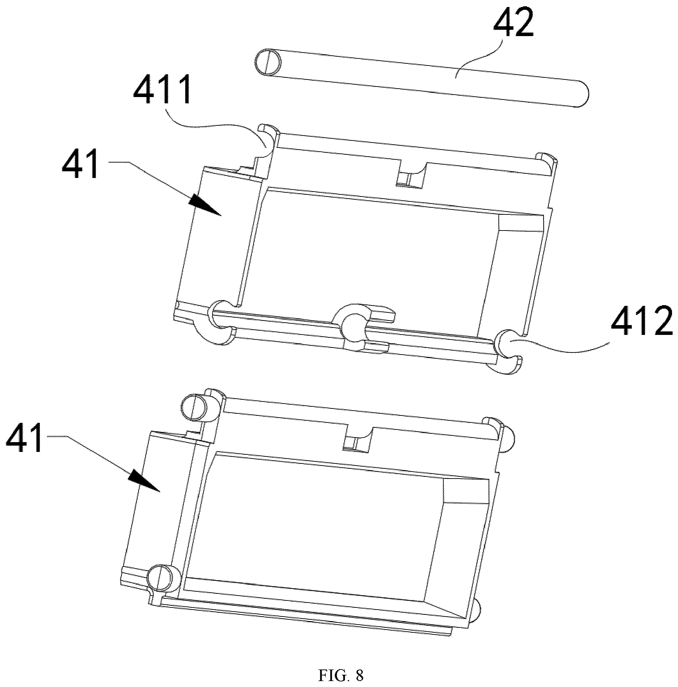

As shown in FIGS. 7 and 8, in other preferred embodiments, the curtain also comprises blades 41 and roller shafts 42. A first claw 411 is arranged on one side of the blade 41, while a second claw 412 is arranged on the opposite side. The first claw 411 and the second claw 412 are oriented in opposite directions. The first claw 411 is used to clamp one roller shaft 42 together with the second claw 412 of the previous blade 41. The second claw 412 is used to clamp another roller shaft 42 together with the first claw 411 of the next blade 41. The roller shaft 42 is wider than the blade 41, and multiple blades 41 and roller shafts 42 are mutually clamped to form the curtain 4. A side clamping groove 313 is arranged on the inner side of the can body 31. One end of a side clamping piece 32 is clamped inside the side clamping groove 313, while the other end extends into the curtain concealing groove 311. The curtain sliding rail 312 is arranged on the inner side of the side clamping piece 32. Meanwhile, a wheel groove 320 for nesting the driven gears 73 and the driving wheel 74 is arranged on the outer side of the side clamping piece 32. In a more preferred embodiment, the cross sections of the can head body 31 and the side clamping piece 32 are L-shaped.

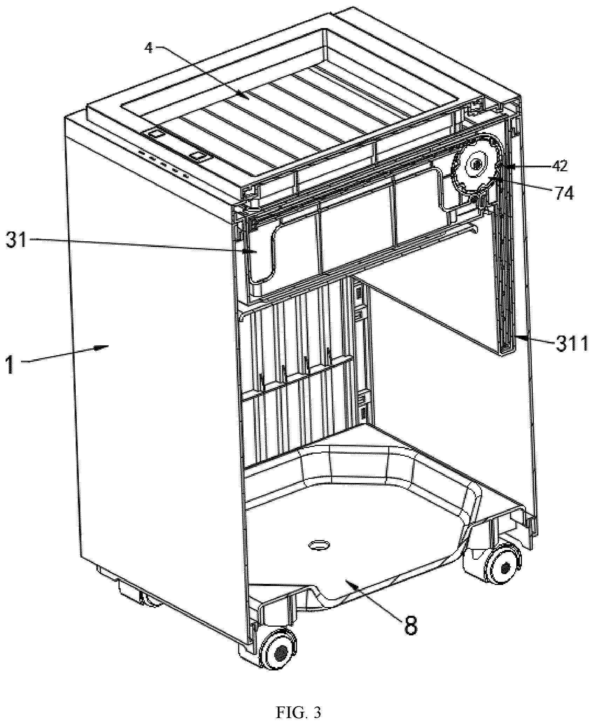

As shown in FIG. 3, specifically, to ensure synchronous movement of the roller shafts 42 on both sides, the power component 7 further comprises a synchronous shaft 75. The driven gears 73 are distributed on both sides of the synchronous shaft 75 and are synchronously driven by a motor 71 connected on one side of the power gears 72. The synchronous shaft 75 simultaneously passes through the wheel groove 320 arranged on the side clamping piece 32.

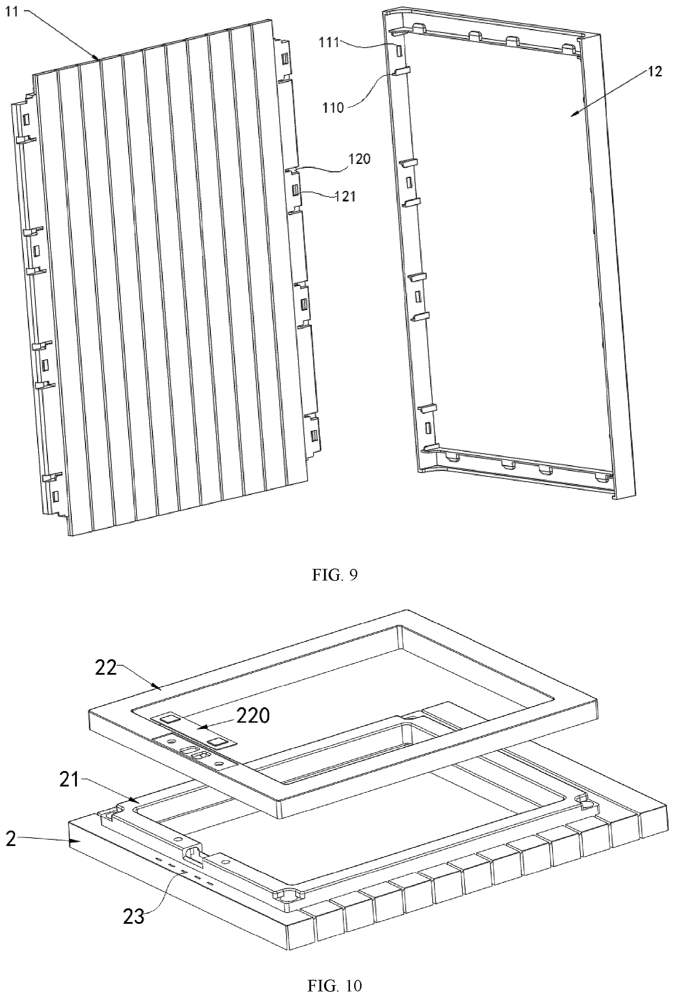

As shown in FIGS. 2 and 9, specifically, the can body 1 comprises two front clamping plates 11 located at the front and rear of the can head 3, and two side clamping plates 12 located on both sides of the can head 3. The two front clamping plates 11 and the two side clamping plates 12 are clamped together in pairs. An outer limit clamping groove 110 is located on the side of the front clamping plate 11, while an inner limit clamping piece 120 is located on the corresponding position of the side clamping plate 12. A clamping top block 111 is arranged on the inner side of the outer limit clamping groove 110. A clamping top groove 121 clamped with the clamping top block 111 is arranged on the inner side of the inner limit clamping piece 120. When the front clamping plates 11 and the side clamping plates 12 are clamped together, the inner limit clamping piece 120 and the outer limit clamping groove 110 are connected for positioning and limiting. Once they are clamped to a certain depth, the clamping top block 111 is precisely clamped with the clamping top groove 121. Here, the outer limit clamping groove 110 is wider than the inner clamping piece 120. Preferably, the outer limit clamping groove 110 and the inner limit clamping piece 120 are both L-shaped and oriented in opposite directions. When clamped together, they form a mutually clamping structure, as shown in FIG. 9. To disassemble, tools such as a straight screwdriver can be used. Additionally, the can lid 2 and the water tray 8 are also clamped to the can body 1 using a clamping structure. The detailed description is omitted here.

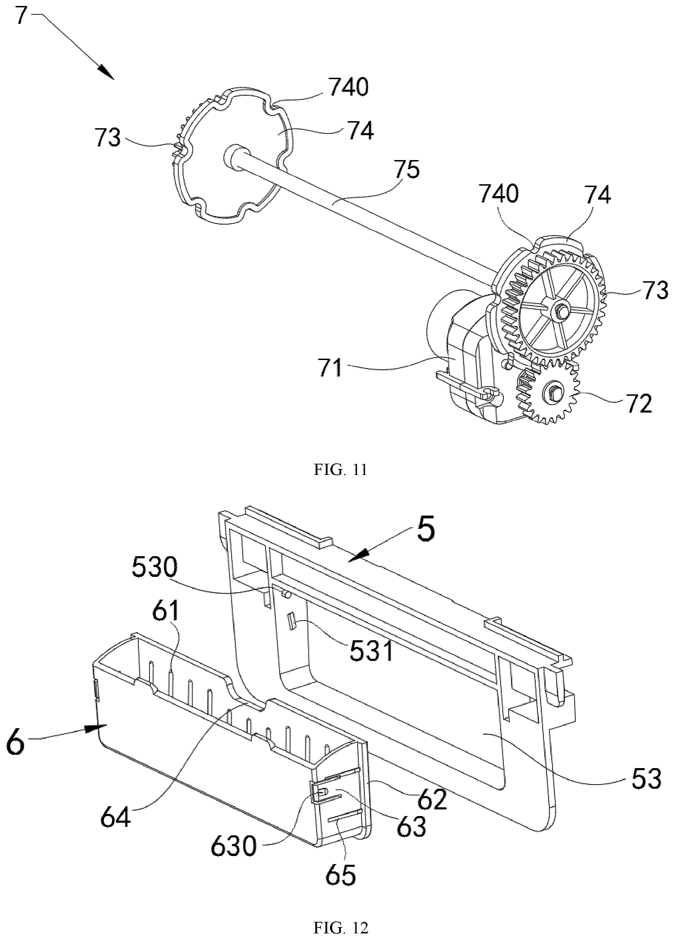

As shown in FIGS. 2 and 12, specifically, a front clamping piece 5 is arranged on one side of the can head body 31. A control board 51 is installed on the front clamping piece 5, with an indicator light 52 arranged on one side of the control board 51. A control button 510 is connected to the control board 51. A deodorizing box 6 is installed on the inner side of the front clamping piece 5, and a deodorizing hole slot 61 is provided on the side of the deodorizing box 6 facing the can head 3. A ring-shaped bump 21 is arranged at the upper end of the can lid 2, onto which a decorative frame 22 is fitted. A control panel 220 is arranged on one side of the decorative frame 22 corresponding to the control board 51, such that the control buttons 510 extend upward through the can lid 2 and abut against the control panel 220. An indicator light hole 23 is also arranged on the outer side of the can lid 2. Furthermore, an infrared sensor 511 is integrated into the control board 51.

The sensing principle of the infrared sensor 511 is as follows: the infrared rays emitted by the infrared emission device are refracted back within a certain height range such as, 10 cm, 20 cm, 30 cm, etc. when unobstructed. If the receiving device fails to detect the refracted signal, it indicates that there is no need to open the curtain. When someone moves their hand directly above the infrared sensor lamp at the corresponding height, the receiving device captures the signal refracted back by the infrared sensor and transmits it to the control board 51. The control board 51 then turns on the switch, sending an electrical signal to the motor 71 to open the curtain 4. After opening, a fixed opening time can be preset. Then, the control board 51 instructs the motor 71 to close the curtain 4. As mentioned above, when the curtain 4 is opened or closed, the indicator light 52 flashes. For garbage bag replacement, the curtain 4 can be kept open by pressing the manual normally open button. Finally, the curtain 4 can be closed by pressing the manual close button. After manual closing, the curtain 4 automatically returns to the infrared sensor activation mode for the next operation cycle.

In optional embodiments, the decorative frame 22 and the ring-shaped bump 21 are magnetically connected. For specific implementation, magnetic attraction blocks can be placed at the end of the ring-shaped bump 21 and at the corresponding position of the decorative frame 22. The ring-shaped bump 21 and the decorative frame 22 can be directly attracted through magnetic positioning, which is very convenient. Moreover, the decorative frame 22 can be customized in various colors to suit consumer preferences and different places.

As shown in FIG. 12, in the embodiment of the mounting structure of the deodorizing box 6, a box clamping groove 53 is arranged on the inner side of the front clamping piece 5. A stop column 530 is arranged on the inner side of the box clamping groove 53, while a clamping block 531 is arranged at the lower end of the stop column 530. A stop edge 62 is arranged on the side of the deodorizing box 6 corresponding to the position of the stop column 530. A clamping switch 63 is arranged on the inner side of the stop edge 62. Meanwhile, a switch bump 630 capable of clamping with the clamping block 531 is arranged on the clamping switch 63. A handgrip groove 64 is also arranged on one side of the deodorizing box 6. The deodorizing box 6 is clamped into the box clamping groove 53 by the fit between the clamping switch 63 and the clamping block 531 as well as the fit between the stop column 530 and the stop edge 62. A diminishing guide edge 65 is arranged on the side of the deodorizing box 6. Its thickness gradually decreases from the inner side to the outer side of the deodorizing box 6, allowing the deodorizing box 6 to be quickly inserted and gradually pressed when clamped with the box clamping groove 53. Additionally, the clamping switch 63 is elastic. During clamping, the clamping switch 63 retracts inward. When the clamping block 531 is just clamped tightly with the switch bump 630, the clamping switch 63 rebounds. When the user pulls the handgrip forcefully by hand, the clamping switch 63 disengages from the switch bump 630 since the switch bump 630 features a rounded corner rather than a folded corner. This permits manual disengagement through applied force. The limits installed inwardly are achieved by the stop edge 62 being clamped on the stop column 530.

A universal wheel 9 is arranged below the water tray 8 for omnidirectional movement. A bagging ring 10 is also arranged below the opening 310 of the can head body 31 for fitting garbage bags.

Unlike the opening mode of traditional double curtains 4, the invention adopts a single-curtain 4 opening and closing mode. This results in a simpler structure, requiring only a curtain concealing groove 311 added to one side. Moreover, the blade 41 component of the invention is more rational and stable, and the connection between the roller shafts 42 and the driving wheel 74 is more stable. Multiple power units 7 between the power components are unnecessary, ensuring synchronous motion without synchronization errors. Additionally, the operation of the single curtain 4 reduces the load of the motor 71, enabling faster opening and closing speeds of the curtain 4 compared to dual-curtain configurations.

For deodorization, the invention incorporates a deodorizing box 6 at the front clamping piece 5. The deodorizing box 6 opens and closes inwardly for convenient deodorant replacement. Its deodorizing hole slot 61 is oriented toward the interior of the can head body 31, emitting odor toward the garbage. The water tray 8 is arranged at the lower end of the can body 1 to collect any excess water.

Regarding structural design, the can body 1 of the invention uses mortise-and-tenon joints to connect the front clamping plates 11 and the side clamping plates 12. These plates are clamped together in pairs and can be directly disassembled, making assembly and disassembly simple. This design directly reduces packaging volume and transportation costs while also allowing consumers to disassemble the trash can for easier handling during use.

With the installation of the infrared sensor 511, the curtain 4 can be opened and closed directly through gesture control, which is very intelligent.

The above embodiments are merely preferred embodiments of the invention and should not be construed as limiting the scope of protection of the invention. Any substantial modifications or substitutions made by those skilled in the art based on the invention shall fall within the claimed scope of protection of the invention.

## Claims

1. A detachable smart trash can, comprising a can body and a can lid, wherein the can lid is arranged at an upper end of the can body, **characterized in that** a can head is further detachably arranged on an inner side of the can body, the can head comprises a closing component, a power component, and a can head body, an opening is arranged at an upper end of the can head body, and the power component is installed on an inner side of the can head body and drives the closing component to open and close the opening of the can head body.

2. The detachable smart trash can according to claim 1, **characterized in that** the closing component comprises a curtain, the can head body is provided with a curtain concealing groove for accommodating part of the curtain; curtain sliding rails are arranged on both sides of the can head body, roller shafts for sliding on the curtain sliding rails are arranged on both sides of the curtain,
the power component comprises motors, power gears, and driven gears, the motors are installed on the inner side of the can head body, output ends of the motors are connected to the power gears, the power gears are connected to the driven gears; the driven gears are coaxially connected to a driving wheel, and a roller shaft groove capable of driving the roller shafts to slide is arranged on the driving wheel.

3. The detachable smart trash can according to claim 2, **characterized in that** the curtain further comprises blades, a first claw is arranged on one side of each blade, a second claw is arranged on the opposite side, two claws are oriented in opposite directions, the first claw clamps one of the roller shafts together with the second claw of the previous blade, the second claw clamps another one of the roller shafts together with the first claw of the next blade; the roller shaft is wider than the blade, and a plurality of blades and roller shafts are mutually clamped with each other to form the curtain,
a side clamping groove is arranged on the inner side of the can head body, one end of a side clamping piece is clamped inside the side clamping groove, the other end extends into the curtain concealing groove; the curtain sliding rail is arranged on an inner side of the side clamping piece, and a wheel groove for nesting the driven gears and the driving wheel is arranged on an outer side of the side clamping piece.

4. The detachable smart trash can according to claim 2, **characterized in that** the power component also comprises a synchronous shaft, driven gears are distributed on both sides of the synchronous shaft and are synchronously driven by connecting the motor on one side to the power gears, and the synchronous shaft simultaneously passes through the wheel grooves on the side clamping pieces.

5. The detachable smart trash can according to any of claims 1-4, **characterized in that** the can body further comprises two front clamping plates at a front and rear of the can head and two side clamping plates on both sides of the can head, two front clamping plates and the two side clamping plates are mutually clamped in pairs, an outer limit clamping groove is arranged on one side of the front clamping plate, an inner limit clamping piece is arranged on the side clamping plate opposite to the outer limit clamping groove, a clamping top block is arranged on an inner side of the outer limit clamping groove, a corresponding clamping top groove is arranged on an inner side of the inner limit clamping piece, and the inner limit clamping piece moves along a direction of the outer limit clamping groove, causing the clamping top block to be clamped with the clamping top groove.

6. The detachable smart trash can according to any of claims 1-4, **characterized in that** a front clamping piece is arranged on one side of the can head body, a control board is installed on the front clamping piece, an indicator light is arranged on one side of the control board, a control button is connected to the control board, a deodorizing box is installed on an inner side of the front clamping piece, a deodorizing hole slot is provided on a side facing the can head, a ring-shaped bump is arranged at an upper end of the can lid, a decorative frame is covered onto the upper end of the can lid, a control panel is arranged on one side of the decorative frame corresponding to the control board, wherein the control buttons pass upward through the can lid to be press against the control panel, an indicator light hole is also arranged on an outer side of the can lid, and an infrared sensor is integrated on the control board.

7. The detachable smart trash can according to claim 6, **characterized in that** the decorative frame and the ring-shaped bump are magnetically connected.

8. The detachable smart trash can according to claim 6, **characterized in that** a box clamping groove is arranged on the inner side of the front clamping piece, a stop column is arranged inside the box clamping groove, a clamping block is arranged at a lower end of the stop column, a stop edge is arranged on a side of the deodorizing box corresponding to a position of the stop column, a clamping switch is arranged on an inner side of the stop edge, a switch bump capable of clamping with the clamping block is arranged on the inner side of the stop edge, a handgrip groove is arranged on one side of the deodorizing box, the deodorizing box is clamped into the box clamping groove by a fit between the clamping switch and the clamping block as well as a fit between the stop column and the stop edge, a diminishing guide edge is arranged on the side of the deodorizing box, and a thickness of the diminishing guide edge gradually decreases from an inner side to an outer side of the deodorizing box.

9. The detachable smart trash can according to claim 8, **characterized in that** a universal wheel is arranged below a water tray, and a bagging ring is also arranged below the opening of the can head body.
